# EUROPEAN PATENT SPECIFICATION

(11) **EP 2 635 609 B1**
(45) Date of publication and mention of the grant of the patent: **04.09.2019**
(21) Application number: 10776894.7
(22) Date of filing: 03.11.2010
(51) Int. Cl.: C08F 6/00, B01J 8/00, C08F 10/00, B01J 19/18, B01J 19/20, C08F 110/02, C08F 2/00, C08L 23/00

(54) **POSTTREATMENT OF PELLETIZED POLYOLEFIN RESINS**
NACHBEHANDLUNG VON PELLETIERTEN POLYOLEFINHARZEN
POST-TRAITEMENT DE RÉSINES DE POLYOLÉFINE PELLETISÉES

(43) Date of publication of application: 11.09.2013
(73) Proprietor: Ineos USA LLC, League City, TX 77573 (US)
(72) Inventor: Rahim, Waseem, League City, TX 77573 (US); Sander, Robert, League City, TX 77573 (US); Yanosik, John, League City, TX 77573 (US)
(74) Representative: Finnegan Europe LLP
(86) International application number: PCT/US2010/055287
(87) International publication number: WO 2012/060828

(56) References cited:
- EP-A1- 1 591 457
- WO-A1-02/088194
- WO-A1-2004/039848
- GB-A- 1 272 778
- US-A- 4 372 758

## Description

This disclosure relates to a method for making pelletized polyolefin resins. More particularly, the disclosure relates to a process that allows for adjustment of certain desired properties of either the resin, such as modification of the bulk density of resin pellets, or adjustment of properties for the articles made from the resin, such as improved odor and taste properties, when used as a bottle cap, for example, or tailoring of the resin volatile or wax level, when used to make pipe, for example. This disclosure also relates to for making pelletized resins, such as mono-modal or multi-modal olefin polymer resins.

There are several benefits associated with the pellets made according to the disclosed description, such as the ability to ship the pellet product at a lower cost. Some methods of bulk shipment, such as rail, are priced based on the cost per shipping container such as a railcar. In these cases an ability to increase the pellet bulk density allows the producer to ship a higher mass of pellets in the same size container or railcar, lowering the shipping cost on a mass basis.

Another benefit is with respect to a pipe resin application, such as the treatment of a high density polyethylene pelletized resin for use in making pipes.
The pipe making process is sensitive to the bulk density of the pellets used to make the pipes. The extruders used to make pipes utilize a design feature called
grooved feed extruders. These extruders have grooves cut into them that
enhances their behavior and increases their throughput rate. These types of extruders are especially prevalent in the large diameter pipe market. If the pellets that are fed to these types of extruders are not the proper balance of shape, size, and bulk density, the result is lower throughput rate and lower quality pipe. This is because a desired pellet bulk density is necessary to maintain stable pellet flow feeding into the extruder and desired production rates, allowing for a consistent and acceptable extrusion rate.

A consistent and desired extrusion rate is important to high-quality, economical pipe/profile manufacturing. Excessive extrusion variability can increase manufacturing cost for the pipe producer due to nonconforming product (outside required dimensional tolerance) and increased material consumption (to maintain minimum wall thickness). Lower bulk density can have an impact on lowering production rates by as much as 20 percent. Hence, for the manufacturer of polyethylene pellets for the pipe producer, at least one aspect that is important is for the pellets to have a desired bulk density. EP1591457 discloses polyolefin treatment for separating volatile material. WO02088194 discloses polymer treatment for separating volatile material. GB1272778 discloses removing volatile constituents from particulate olefin polymers. US4372758 discloses a degassing process for removing unpolymerised monomers from olefin polymers. WO2004039848 discloses polymer treatment.

In one aspect, this disclosure provides a method of making pellets of desired bulk density to make the pipe process extruders and other processing equipment work as they are designed. Current methods of adjusting the bulk density of pellets include adjusting the pelletizing conditions at an extruder. Typically this involves changing the length of the pellets. The pellet geometry is important for some resins to improve the bulk density. Secondly, the pellet water temperature for underwater pelletizers can be important influences on bulk density. Thirdly, the die plate design can be adjusted to affect pellet shape and thus bulk density. However, none of these alternative methods can achieve the level of bulk density that the disclosed process achieves.

Therefore, there remains a need for a method that is capable of modifying the bulk density of a pelletized resin, such as mono-modal or multi-modal (such as bimodal) olefin polymer resin, and that does not adversely effect size or geometry of the pellet. In one aspect, the Inventors have discovered a method of making pellets comprising mono-modal or multi-modal olefin polymer resin that achieves an increase in bulk density without changing the appearance of the pellets. In another aspect, there is disclosed a method of making pellets comprising mono-modal or multi-modal olefin polymer resin with increased bulk density having improved color, smell, and/or taste. Systems comprising the above are also disclosed.

Another benefit is with respect to the ability to modify the profile or amount of organic materials in the resin, such as the level of waxes, oligomers, or volatiles in the resin based upon the desirable characteristics of the article that is made from the resin. As described in prior art, resins often contain small levels of compounds such as volatiles, oligomers, and waxes. In some applications having a certain level of these compounds can be beneficial, such as in the manufacturing of film products. In other applications it is beneficial to remove compounds in the resin, such as waxes, oligomers, volatiles, unreacted monomer, oxidation byproducts produced, to a level below the baseline amount. An example would be an article that needs a low taste or odor profile such as an article that comes into contact with food, or drinks, such as water. Non-limiting examples of such articles include a bottle, a film, a pipe, a cap or a closure. Based upon the needs of the final article, this invention allows the resin manufacturer the ability to selectively tailor the final level of these compounds in the resin by adjusting operating conditions within this process.

### SUMMARY

Therefore, there are provided herein methods of making a pelletized polyolefin resin comprising:
introducing pellets comprising polyolefins to a holding vessel, wherein the pellets introduced to the holding vessel are pre-heated prior to entering said holding vessel;
heating the pellets in said holding vessel to a hold temperature for 4 to 18 hours at or below the softening point of the polyolefins;
maintaining the pellets at said hold temperature;
purging the holding vessel of volatile materials; and
treating the purged volatile materials by exposing them to at least one thermal destruction process,
   wherein said pellets are heated to said temperature for a time sufficient to modify
the bulk density of said pellets; wherein the pellets comprise at least one multi-modal olefin polymer; and wherein the method further comprises cooling the pellets below the hold temperature.

In one embodiment, modifying the level of organic materials other than the polyolefin means to decrease the amount of other organic materials present, such as organic materials chosen from waxes, oligomers, and volatile materials, or other organic materials which are otherwise inherently present in the polyolefin or those which are difficult to quantify and/or elucidate using standard industrial means.

However, in other embodiments, such as when the resin is subsequently used as a film, the organic materials may be maintained or modified, such as decreased to a level sufficient to allow the resin to be further processed by at least one film-forming process.

It is appreciated that when the resin is to be used in an article that will come into contact with food or water, the organic materials are adjusted to a level sufficient to decrease or eliminate the taste and/or odor of the resin. In this embodiment, the method further comprises at least one processing step to form the resin into an article that will come into contact with food or water, such as a cap, closure, bottle, film, pipe or container.

There are also disclosed methods of making a pelletized polyolefin resin tailored to the needs of specific applications, such as caps and closures, films, bottles, pipes, and containers. Such methods may comprise:
introducing pellets of polyolefin to a holding vessel, wherein said pellets have and initial bulk density (dᵢ) when measured at T_{ref}, wherein the pellets comprise at least one multi-modal olefin polymer and wherein the pellets introduced to the holding vessel are pre-heated prior to entering said holding vessel;
heating the pellets in said holding vessel to a hold temperature for 4 to 18 hours at or below the softening point of the polyolefin;
maintaining the pellets at said hold temperature for a sufficient time to remove at least one monomer or oligomer from said pellets to a level sufficient to improve the odor or taste, or a combination thereof, of said pelletized polyolefin resin wherein said at least one monomer or oligomer removed from said pellets form volatile material in said holding vessel, wherein said pellets have a final bulk density (d_{f}), wherein d_{f} dᵢ;
when measured at T_{ref};
purging the holding vessel of said volatile materials; and treating the purged volatile materials by exposing them to at least one thermal destruction process selected from a thermal oxidizer or flare;
preferably wherein the thermal destruction process is a thermal oxidizer.

The processes described herein can be used to remove low molecular weight hydrocarbons from a polyolefin polymer for any of several end uses. For instance, this process is used to treat bimodal polyethylene pipe resins to remove smoky hydrocarbons that cause difficulty in pipe manufacture. It is also used to improve the organoleptic properties of polyolefins used in potable water or food contact applications.

In another aspect, the invention provides a system for making pelletized resin. In a further aspect, the pelletized resin described herein, have improved properties such as increased bulk density, reduction of volatiles, including oligomers or monomers, which leads to a corresponding improvement in odor and/or taste, when used in applications that come into contact with potable water, such as drinking container or caps, water pipes, and the like. Other properties that would be advantageous or commercial suitable will also become apparent from the following disclosure.

In many cases, local environmental considerations make it necessary to process and treat the purged gas (from the purging step) due to the presence of oligomers or small amounts of residual hydrocarbons. Thus, it has been discovered that these unwanted volatile materials can be appropriately processed when the system further comprises a thermal destruction device, such as a flare or a thermal oxidizer.

The foregoing and other features of the present disclosure will be more readily apparent from the following detailed description of exemplary embodiments, taken in conjunction with the attached drawings. It will be noted that for convenience all illustrations of devices show the height dimension exaggerated in relation to the width.

### Brief Description of the Drawings

**Fig. 1** is a schematic of one representative system according to the present disclosure.
**Fig. 2** is a graph of final bulk density vs. pellet temperature for sample made according to the present disclosure.
**Fig. 3** is a schematic of a Farrel Continuous Mixer used in the present disclosure.

### Detailed Description

As previously stated, there are disclosed methods of making a pelletized polyolefin resin, tailored to the needs of specific applications, such as caps and closures, film, bottles, pipe, and containers, comprising: introducing pellets comprising polyolefins to a holding vessel;
heating the pellets in the holding vessel to a hold temperature at or below the softening point of the polyolefins;
maintaining the pellets at the hold temperature;
purging the holding vessel of volatile materials; and
treating the purged volatile materials by exposing them to at least one thermal destruction process,
wherein the pellets are heated to the temperature for a time sufficient to modify:
the bulk density of the pellets, such as increasing the bulk density; and optionally the level of organic materials other than the polyolefins originally present in the resin.

In one embodiment, the process comprises introducing pellets of polyolefin to a holding vessel, wherein the pellets have an initial bulk density (dᵢ) when measured at T_{ref};
heating the pellets in the holding vessel to a hold temperature, specified by the needs of the final application, at or below the softening point of the polyolefin;
maintaining the pellets at the hold temperature for a hold time, specified by the needs of the application, sufficient to remove at least one monomer or oligomer from the pellets, wherein the at least one monomer or oligomer removed from the pellets form volatile materials in the holding vessel, wherein the pellets have a final bulk density (d_{f}), such that d_{f} ≥ dᵢ, when measured at T_{ref};
purging the holding vessel of the volatile materials; and
treating the purged volatile materials by exposing them to at least one thermal destruction process.

The pellets are introduced to the holding vessel and pre-heated prior to entering the holding vessel, such as to a temperature ranging from 60-166 °C (140-330 °F), or 60-129 °C (140-265 °F), or even at a temperature ranging from 60-71 °C (140-160 °F). In one embodiment, the pellets are extrude d prior to being introduced into the pre-heater and holding vessel.

The pellets comprise at least one multi-modal olefin polymer, such as, ethylene, propylene, methylpentene, hexene- 1 , and butene-1. In another embodiment, the olefin polymer is bimodal.

Upon entering the holding vessel, the pellets are heated in the holding vessel to a temperature ranging from 60-166 °C (140 -330 °F), 60-129 °C (140-265 °F), or 60-71 °C (140-160 °F), for a time that would be sufficient to remove at least one monomer or oligomer from the pellets. This time ranges from 4-18 hours, such as from 5-15 hours, or even from 8-12 hours.

It is to be appreciated that the pellets may remain in the holding vessel described above only until they reach the desired temperature that would be sufficient to remove at least one monomer or oligomer from the pellets. As used herein, an oligomer is defined as a molecule that contains between one to nine monomer units, generally formed as a byproduct during a reaction to make polyolefins from monomer. In some embodiments, oligomers containing C₆-C₁₀ can be removed from the pellets, while in other embodiments, the testing and removal of oligomers containing C₂-C₈ is contemplated. In general, a method according to one embodiment of the present disclosure focuses on oligomers up to C₁₈, which would correlate to nine ethylene monomers in the case of PE, for example.

At this point, the pellets can be transferred to a separate degasser vessel. However, in an alternative embodiment, the pellet heating and degassing may be carried out in the same vessel. Both embodiments are encompassed by this disclosure.

After maintaining the pellets in the holding vessel for the time described above, the pellets are optionally cooled to a temperature below the hold temperature, such as to room temperature. In one embodiment, the optional cooling is performed using a gas purge or cool water exchanger.

Upon cooling, an increase in bulk density of the pellets may also be realized. For example, in one embodiment, the pellets introduced to the holding vessel have an initial bulk density (dᵢ) of less than 593 kg/m³ (37 lb/ft³), such as about 561-577 kg/m³ (35-36 lb/ft³), but exhibit a final bulk density (d_{f}) of 593 kg/m³ (37 lb/ft³) or greater, such as about 601kg/m³ (37.5 lb/ft³) after cooling to room temperature. In one embodiment, the cooled pellets have an average nominal diameter ranging from 1.27 to 8.89mm (0.05 to 0.35 inches).

In one embodiment, treating the purged volatile materials is carried out by exposing the volatile materials to at least one thermal destruction process, such as by passing the volatile materials through a flare or thermal oxidizer.

As described above, the cooling step may be avoided if the pellets are subjected to additional processing, such as to make an article, prior to cooling. For example, if the heat-treated pellets are further processed into an article, such as extrusion, thermoforming, blow molding or injection, or rotomolding, the pellets need not be cooled to room temperature prior to entering the additional processing apparatus, whether it is an extruder, forming or molding device.

Non-limiting examples of articles that can be made according to the methods described herein include pipes, containers, films, and caps, such as for bottles, and other closure devices. The container may be, or comprise, for example, a bottle.

In one embodiment, purging of the holding vessel is carried out with air, fuel gas, or a non hydrocarbon gas, such as, for example, nitrogen.

Also disclosed is a system for making a pelletized resin having improved properties, such as an increased bulk density. In one embodiment, the system comprises:
(a) an apparatus for introducing resin pellets into a vessel;
(b) a vessel for heating the pellets to the softening temperature of the resin, the vessel containing at least one port for removing volatile materials generated from the pellets during heating; and
(c) a holding vessel for maintaining the pellets at the temperature for a specified period of time, wherein the holding vessel contains at least one port for removing volatile materials generated from the pellets during heating; and
(d) a cooling vessel for cooling said pellets below said hold temperature,
wherein said system further comprises a thermal oxidizer connected to at least one port of said holding vessel.

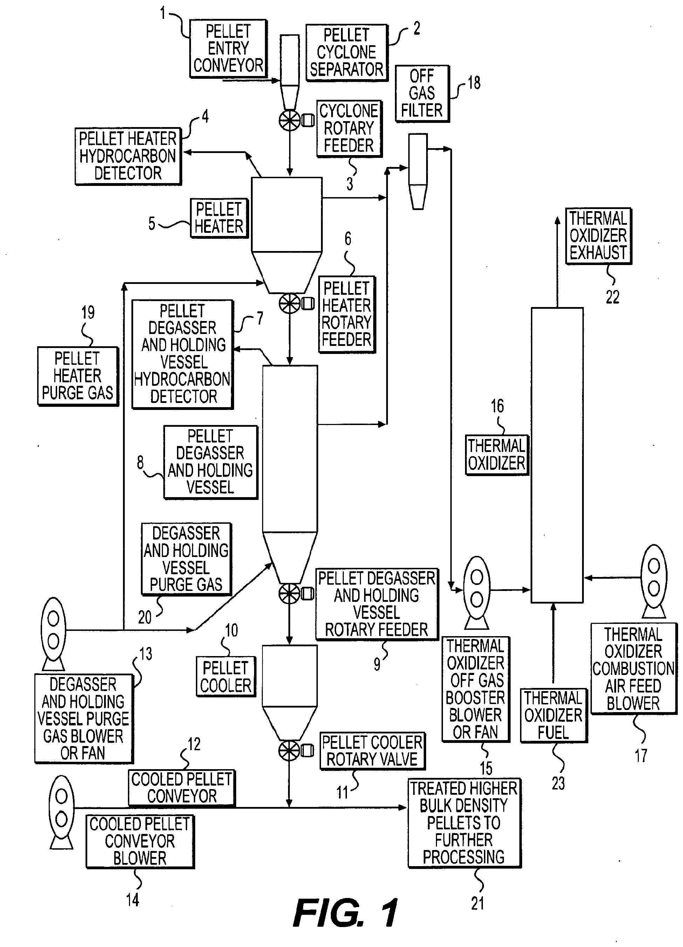

With reference to Fig. 1, one system made according to the present disclosure may include: a pellet entry conveyor (1) for delivering pellets to a pellet cyclone separator (2). From the separator, the pellets are fed by a cyclone rotary feeder (3) into a pellet heater (5), and monitored by a pellet heater hydrocarbon detector (4). Next, upon exiting the heater, the pellets may be moved via a rotary feeder (6) into a pellet degasser and holding vessel (8), and again be monitored by a hydrocarbon detector (7). When the system includes a cooling vessel (10), another rotary feeder (9) may be used transport the pellets to the pellet cooler (10). Finally, the cooled pellets may exit the cooler (10) via another rotary feeder (11), unto a cooled Pellet conveyor (12), which transports the treated higher bulk density pellets to further processing steps, if necessary, such as molding, extruding or forming the pellets into an desired article.

In various embodiment, the system may include the use of any number of blowers or fans, such as a degasser and holding vessel purge gas blower or fan (13), a cooled Pellet conveyor blower (14), a thermal oxidizer off gas booster blower or fan (15), and a thermal oxidizer combustion air feed blower (17). With regard to the thermal oxidizer (16) shown in Fig. 1 , it is clear that the volatile materials generated in either the heater (5) or the degasser vessel (8) can be directly or indirectly connected to the thermal oxidizer (16), via an off gas filter (18).

A system according to one embodiment of the present disclosure may also include various purge gases, and inlets for the same. For example, Fig. 1 exemplifies a pellet heater purge gas (19), as well as a degasser and holding vessel purge gas line (20).

Finally, Fig. 1 exemplifies the thermal oxidizer exhaust (22) and thermal oxidizer fuel (23).

As shown, in one embodiment, the system described herein may have at least one feeder located between (a) and (b), or between (b) and (c), such as a cyclone rotary feeder.

In another embodiment, the system described herein further comprises an extruder located before the apparatus in (a). In this embodiment, the apparatus for introducing the pellets to the vessel comprises a conveyor belt located between the extruder and the vessel.

In yet another embodiment, the system described herein may further comprise a pellet degasser vessel located down-stream of the heater/holding vessel. For example, if the system comprises a cooling vessel, the degasser would be located between the holding vessel and cooling vessel.

In one embodiment, the foregoing monomers, oligomers, waxes, or produced oxidations products and foregoing volatile materials are removed to a level sufficient to improve the odor or taste, or combinations thereof, of the pelletized polyolefin resin.

It is also possible to produce high bulk density pellets by making the pellets very small. In one embodiment, the pellets made according to the present disclosure were nominally 1/8" diameter pellets; however, it is possible to make pellets that have a diameter about 10% of this diameter.

In one embodiment, the present disclosure is directed to a method for making bimodal polyolefin resins having improved bulk density properties. This embodiment is consistent with those previously described herein, in that the method comprises: a heating step, a residence time/holding step, a safety purging step, and an optional cooling step, wherein waste gases generated by this process may be further treated by a thermal destruction process.

Without being bound by any theory, it is believed that the pellet bulk density is improved by heat treatment of the pellets to adjust the surface properties, a process that anneals the polymer by holding it at an elevated temperature for a prescribed length of time. The pellets have an individual resin density, also referred to as an initial bulk density, which is determined previously by the reaction manufacturing process before the pellets get to the pellet bulk density improver. This bulk density improver process relates to the solids bulk density as in a sample of pellets placed in container of known volume and then weighed.

The upstream extrusion process typically employed to produce the pellets is not designed to provide the conditions needed for annealing of the polymer pellets. As described in literature, pellets in the extrusion section are usually kept below the temperatures needed for bulk density improvement. As described herein, the pellet heater raises the polymer pellet temperature to a level just below the softening point of plastic pellets. The softening point for plastic, also called the Vicat softening point, is determined by measuring the temperature at which a flat ended needle penetrates a specimen by 1 mm and is used to determine softening temperatures when a plastic is used at elevated temperatures. The pellets are held at that elevated temperature for a time of approximately, for example, 10-15 hours, and then cooled down to provide safe conveying conditions. By keeping the pellets at elevated temperature for a minimum hold time, the polymer molecules are allowed to relax more thus changing the pellet size enough to increase their bulk density. The increase in bulk density may also result in a change in surface coefficient of friction such that the pellets are able to pack more tightly.

The purging step assures there is no unsafe condition in the heater and in the holding vessel. In the absence of this step, the materials evolved in the heating step can cause an unacceptably high level of combustible hydrocarbons to be present in the headspace of the processing equipment and thus cause flammable or explosive condition to exist. Purging can be done with air or any other non-hydrocarbon gas, such as nitrogen.

The optional cooling step further facilitates handling of the pellets either in pellet conveying or in packaging functions. In certain circumstances, if left in the heated condition, there may be problems in handling the pellets such as angel hair creation in pneumatic conveying, a phenomenon well-known in the art. However, the optional cooling step depends on the specific processing method utilized after the temperature holding step.

As previously indicated, for environmental reasons, it is becoming more important to be able to process and treat the purge gas (from the purging step) due to the presence of oligomers or small amounts of residual hydrocarbons. This can be done by sending these gases to a flare or a thermal oxidizer. The thermal oxidizer allows for the use of air as the source for the purge gas. The alternative method, a flare, requires a purge gas that is oxygen-free.

In one embodiment, the piping that is used to transport the purge gases to the combustion device should be heat-traced and/or insulated to prevent the deposit of heavy oligomers or hydrocarbons on the pipe walls. Heat tracing can be done with either steam or electricity, but electric allows for more precise temperature control. In addition, a mechanism to filter the purge gas effluent may be installed to eliminate fine contaminants such as small pellets that are carried overhead by the purge gas. Finally, the gases are sent to a thermal oxidizer to combust the purge gas and safely destroy any levels of oligomers or hydrocarbons. Depending upon the pressure of the purge gas, it might be necessary to install a booster fan or blower before the thermal oxidizer to develop the head pressure needed to feed into the combustion device.

Also provided is an enhancement to known processes used in pellet treatment for target applications, such as those described in EP1591457A1 ; GB1272778A; WO04039848A1; WO02088194A1; US4372758A and U.S. Patent No. 7,232,878 B2. Therefore, the process described herein further provides, in addition to those described above, additional benefits to the resin manufacturer, as well as the resin consumer.

With respect to modifying the bulk density of the pellets, the pellet heater is one important part of the process and system because heat is the driving force for altering the bulk density of the pellets. The pellets are heated to provide an environment suitable for the polymer to come to a new pellet packing density. The heater must be able to provide enough heat economically and to prevent agglomeration of the polymer. Steam or hot water may be used to provide the heat to the pellets. The use of for instance, hot air to heat up the pellets is also possible but it tends to be energy intensive and it can cause problems handling large quantities of hydrocarbon-contaminated purge gas.

Once heated, and in the case of modifying the bulk density of the pellets, the pellets must be maintained at the elevated temperature to allow the polymer molecules to relax. This may be done by letting the pellets reside in a holding vessel or transferring them to a separate degasser vessel. Regardless of which vessel the pellets are maintained in, the vessel capacity is based on the process flow rate of pellets in order to achieve the correct 4-18 hour residence time. In one embodiment, pellets in the heater and/or degasser vessel(s) must be purged continuously with a stream of gas to prevent the accumulation of an explosive atmosphere. Because the purging step sweeps away low levels of oligomers and hydrocarbons, and such materials are not allowed to be released into the atmosphere, it may be necessary to remove or destroy these materials, such as with a thermal oxidizer. Other options for doing this include burning the gaseous stream in a flare provided the purge gas does not contain oxygen. If it contains oxygen, then a thermal oxidizer may be utilized.

The pellet cooler could be modified to use a cool air purge instead of a cooling water exchanger.

The heater design must take into account the maximum temperature limits of the polymer being heated. For example, in the case of bimodal polyethylene, this limit is close to the Vicat softening point or about 99 °C (211 °F) and the temperature limit of the heating medium is also limited. The pellets should not be heated higher than this temperature to avoid complications such as melting or agglomeration of the pellets. If it is steam, the maximum steam temperature for heating bimodal polyethylene is 113 °C (235 °F). It is appreciated that there must be a means of controlling the temperature of the heated pellets and maintaining that temperature over the duration of the hold time.

### EXAMPLES

### Example 1: Bimodal Polyethylene Pellets Maintained at One Temperature

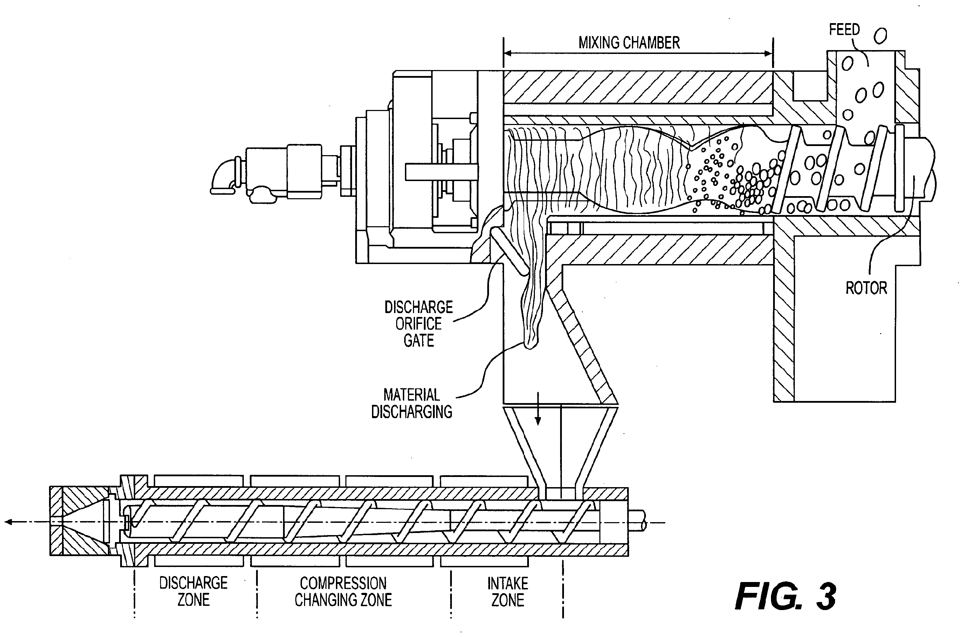

In one example, bimodal polyethylene pellets were produced on a Farrel Continuous mixer compounding line. The Farrel Continuous Mixer used in this example was: (1) a twin rotor mixing device with dissimilar rotors turning at different speeds, one speed approximately 10-15% slower than the other; (2) was an adjustable restrictive device or orifice capable of adjustment while running; (3) was a melt pressurization device such as an extruder which conveyed the melt and provided pressure; and (4) was a melt feed stuffer to push the melt into the extruder flights. The attached figure Figure 3 shows schematically a Farrel Continuous Mixer used in the process according to the invention. These pellets were then fed into the apparatus shown in Fig. 1, and described herein. The bimodal pellets leaving the compounder had an initial bulk density of 561 kg/m³ (35.0 lb/ft³), below the desired minimum bulk density of 577 kg/m³ (36.0 lb/ft³). The pellets were then treated in the apparatus at 96 °C (205 degrees Fahrenheit (F)), resulting in a final bulk density of 597 kg/m³ (37.3 lb/ft³). These results are tabulated in Table 1 below.

**Table 1**

| **Pellet Treatment Temperature (F) °C** | **Average Inlet Bulk Density kg/m³ (lb/ft³)** | **Average Outlet Bulk Density kg/m³ (lb/ft³)** |
|---|---|---|
| 96 (205) | 561 (35.0) | 597 (37.3) |

### Example 2: Bimodal Polyethylene Maintained at Various Temperatures

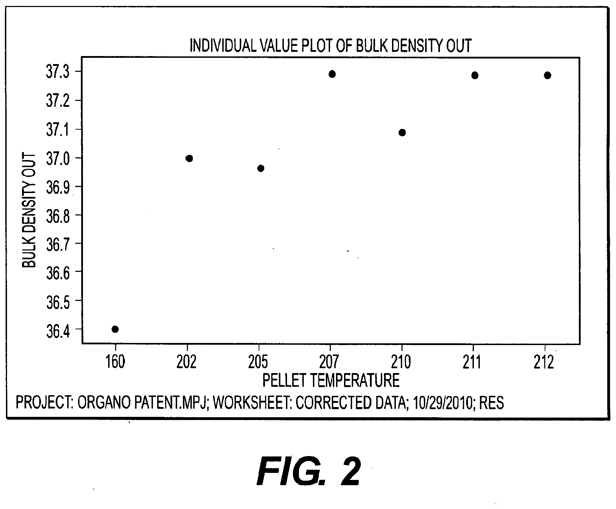

In another example, bimodal polyethylene pellets were produced on a Farrel Continuous mixer compounding line, as described in Example 1. These pellets were then fed into the apparatus shown in Fig. 1. The pellet treatment temperature in the apparatus was varied between 71 °C (160 °F) and 100 °C (212 °F). The 71 °C (160 °F) was chosen because that is the unheated temperature of the pellets as they exited the pelletizer on the extruder. Samples were taken of the pellets entering the heater and of pellets exiting the cooler to measure the change in bulk density. The data is presented below in Table 2, and graphically represented in Fig. 2.

**Table 2**

| **Pellet Temperature** ° C (°F) | **Average Inlet Bulk Density kg/m³ (lb/ft³)** | **Average Out let Bulk Density (lb/ft³) kg/m³** |
|---|---|---|
| 71 (160) | 583 (36.4) | 583 (36.4) |
| 94 (202) | 585 (36.5) | 593 (37.0) |
| 96 (205) | 575 (35.9) | 593 (37.0) |
| 97 (207) | 581 (36.3) | 597 (37.3) |
| 100 (212) | 583 (36.4) | 597 (37.3) |

### Example 3: Tailoring the Level of Oligomers in Bimodal Polyethylene by Adjusting Pellet Temperatures while Keeping the Residence Time Constant

In another example, bimodal polyethylene pellets were produced on a Farrel Continuous mixer compounding line, as described in Example 1. These pellets were then fed into the apparatus shown in Fig. 1. The pellet temperature in the apparatus was varied while keeping the residence time constant at each temperature. Samples of the pellets were taken before and after the apparatus to measure the modification of the oligomers level in the resin. For the purposes of this example the residence time was maintained at twelve hours.

**Table 3**

| **Pellet Temperature (°F)** | **Inlet Average C6-C10** | **Outlet C6-C10 Oligomer Level** |
|---|---|---|
| **°C** | **Oligomer Level (ppm)** | **(ppm)** |
| 71 (160) | 262 | 69 |
| 89 (193) | 262 | 32 |
| 96 (205) | 262 | 18 |
| 99 (211) | 262 | 16 |

### Example 4: Modifying the Taste and Odor Properties of the Resin

In another example, monomodal polyethylene pellets were produced on a Farrel Continuous mixer compounding line, as described in Example 1. These pellets were then fed into the apparatus shown in Fig. 1. The pellets in the apparatus were heated to a hold temperature of 93 °C (200 degrees Fahrenheit (F)). The residence time was held constant at twelve hours. Samples of the pellets were taken after the apparatus and tested for a taste profile on a scale of one to four (one being good taste or low odor and four being poor taste and high odor). The lower score of the treated pellets (as compared to the untreated pellets) indicates that the apparatus improved the taste and odor profile of the resin.

**Table 4**

| | Untreated Pellets | Treated Pellets 82 °C (180°F) | Treated Pellets 93 °C (200°F) Case 1 | Treated Pellets 93 °C (200°F) Case 2 |
|---|---|---|---|---|
| Taste (Scale of 1-4) | 3.7 | 3.0 | 2.3 | 2.5 |
| Average (C2-C8) Oligomers ppm | 132 | 13.9 | 1.34 | 0.82 |

Notwithstanding that the numerical ranges and parameters are approximations, unless otherwise indicated the numerical values set forth in the specific examples are reported as precisely as possible. Any numerical value, however, inherently contains certain errors necessarily resulting from the standard deviation found in their respective testing measurements.

Other embodiments of the devices and methods described herein will be apparent to those skilled in the art from consideration of the specification and practice. It is intended that the specification and examples be considered as exemplary only.

## Claims

1. A method of making pelletized polyolefin resin comprising:
introducing pellets comprising polyolefins to a holding vessel, wherein the pellets introduced to the holding vessel are pre-heated prior to entering said holding vessel;
heating the pellets in said holding vessel to a hold temperature for 4 to 18 hours at or below the softening point of the polyolefins;
maintaining the pellets at said hold temperature;
purging the holding vessel of volatile materials; and
treating the purged volatile materials by exposing them to at least one thermal destruction process,
wherein said pellets are heated to said temperature for a time sufficient to modify the bulk density of said pellets; wherein the pellets comprise at least one multi-modal olefin polymer; and wherein the method further comprises cooling the pellets below the hold temperature.

2. The method of claim 1, wherein the level of organic materials other than said polyolefin is decreased, preferably
wherein the organic materials are chosen from waxes, oligomers, and volatile materials, optionally
wherein said organic materials are decreased to a level sufficient to allow the resin to be further processed by at least one film-forming process.

3. The method of claim 1, wherein said organic materials are adjusted to a level sufficient to change the taste and/or odor of said resin, preferably the method
further comprising at least one processing step to form said resin into an article that will come into contact with food or water, optionally
wherein said article comprises a cap, closure, bottle, pipe, film, or container.

4. The method of claim 1, wherein modifying the bulk density of the pellets comprises increasing said bulk density.

5. The method of claim 1, wherein the pellets are pre-heated to a temperature ranging from
60-166°C (140-330°F), optionally
wherein the pellets are extruded prior to being introduced into the pre-heater and holding vessel.

6. The method of claim 1, wherein the olefin of said olefin polymer is chosen from ethylene, propylene, methylpentene, hexene-1, and butene-1, optionally wherein said olefin polymer is bimodal.

7. The method of claim 1, wherein the pellets are maintained in the hold vessel at a temperature ranging from 60-166°C (140-330°F).

8. The method of claim 1,
wherein the time sufficient to remove at least one monomer or oligomer from the pellets ranges from 10-15 hours.

9. The method of claim 1, wherein said cooling is performed until the pellets reach room temperature, optionally
wherein said cooling is performed using a cool gas purge or a cool water exchanger.

10. The method of claim 1, wherein the cooled pellets have an average nominal diameter ranging from 1.27 to 8.89mm (0.05 to 0.35 inches).

11. The method of claim 1, wherein purging the holding vessel of the volatile materials is done with air, fuel gas, or a non-hydrocarbon gas, optionally wherein the non-hydrocarbon gas comprises nitrogen.

12. The method of claim 1, wherein the at least one thermal destruction process comprises passing the volatile materials through a flare or thermal oxidizer.

13. The method of claim 1, wherein said at least one additional processing step that forms said pellets into an article comprises extrusion, injection molding, blow molding, thermoforming, or rotomolding.

## Patentansprüche

1. Verfahren zum Herstellen von pelletiertem Polyolefinharz, umfassend:
Einführen von Pellets, umfassend Polyolefine in einen Speicherbehälter, wobei die in den Speicherbehälter eingeführten Pellets vor dem Eintrag in den Speicherbehälter vorgeheizt sind; Heizen der Pellets im Speicherbehälter auf eine Speichertemperatur für 4 bis 18 Stunden bei oder unter dem Erweichungspunkt der Polyolefine;
Halten der Pellets auf der Speichertemperatur;
Ausspülen volatiler Materialien aus dem Speicherbehälter;
und Behandeln der ausgespülten volatilen Materialien durch Exposition gegenüber mindestens einem thermischen Zerstörungsprozess,
in dem die Pellets für eine Zeit auf die Temperatur geheizt werden, die ausreicht, um die Schüttdichte der Pellets zu modifizieren; wobei die Pellets mindestens ein multimodales Olefinpolymer umfassen; und wobei das Verfahren ferner das Abkühlen der Pellets unter die Speichertemperatur umfasst.

2. Verfahren nach Anspruch 1, wobei die Menge organischer Materialien außer dem Polyolefin gesenkt wird, vorzugsweise
wobei die organischen Materialien ausgewählt sind aus Wachsen, Oligomeren und volatilen Materialien, optional
wobei die organischen Materialien auf eine Menge gesenkt werden, die ausreicht, um eine Weiterverarbeitung des Harzes durch mindestens einen Filmbildungsprozess zu ermöglichen.

3. Verfahren nach Anspruch 1, wobei die organischen Materialien auf eine Höhe eingestellt sind, die ausreicht, um den Geschmack und/oder den Geruch des Harzes zu ändern, vorzugsweise wobei das Verfahren ferner mindestens einen Verarbeitungsschritt zum Formen des Harzes in einen Artikel umfasst, der mit Nahrungsmitteln oder Wasser in Berührung kommen wird, optional wobei der Artikel eine Kappe, einen Verschluss, eine Flasche, ein Rohr, einen Film oder einen Behälter umfasst.

4. Verfahren nach Anspruch 1, wobei das Modifizieren der Schüttdichte der Pellets das Erhöhen der Schüttdichte umfasst.

5. Verfahren nach Anspruch 1, wobei die Pellets auf eine Temperatur im Bereich von 60-166°C (140-330°F) vorgeheizt werden, optional
wobei die Pellets vor der Einführung in den Vorheizer und den Speicherbehälter extrudiert werden.

6. Verfahren nach Anspruch 1, wobei das Olefin des Olefinpolymers ausgewählt ist aus Ethylen, Propylen, Methylpenten, Hexen-1 und Buten-1, optional
wobei das Olefinpolymer bimodal ist.

7. Verfahren nach Anspruch 1, wobei die Pellets im Speicherbehälter bei einer Temperatur im Bereich von 60-166°C (140-330°F) gehalten werden.

8. Verfahren nach Anspruch 1, wobei die Zeit, die zum Entfernen mindestens eines Monomers oder Oligomers aus den Pellets ausreicht, von 10 bis 15 Stunden reicht.

9. Verfahren nach Anspruch 1, wobei das Kühlen ausgeführt wird, bis die Pellets Zimmertemperatur erreichen, optional
wobei das Kühlen mithilfe einer Kühlungsgasausspülung oder eines Kühlungswassertauschers ausgeführt wird.

10. Verfahren nach Anspruch 1, wobei die gekühlten Pellets einen durchschnittlichen nominalen Durchmesser im Bereich von 1,27 bis 8,89 mm (0,05 bis 0,35 Zoll) aufweisen.

11. Verfahren nach Anspruch 1, wobei das Ausspülen volatiler Materialien aus dem Speicherbehälter mit Luft, Brennstoffgas oder einem Nicht-Kohlenwasserstoffgas erfolgt, optional
wobei das Nicht-Kohlenwasserstoffgas Stickstoff umfasst.

12. Verfahren nach Anspruch 1, wobei der mindestens eine thermische Zerstörungsprozess das Durchleiten der volatilen Materialien durch eine Fackel oder einen thermischen Oxidierer umfasst.

13. Verfahren nach Anspruch 1, wobei der mindestens eine zusätzliche Verarbeitungsschritt, der die Pellets in einen Artikel formt, Extrusion, Spritzguss, Blasformen, Thermoformen oder Rotoformen umfasst.

## Revendications

1. Procédé de fabrication de résine de polyoléfine en granules comprenant :
l'introduction de granules comprenant des polyoléfines dans un récipient de rétention, lesdites granules introduites dans le récipient de rétention étant préchauffées avant d'entrer dans ledit récipient de rétention ; le chauffage des granules dans ledit récipient de rétention à une température de rétention pendant 4 à 18 heures au point de ramollissement des polyoléfines ou en-dessous celui-ci ; le maintien des granules à ladite température de rétention ; la purge des matières volatiles du récipient de rétention ;
et le traitement des matières volatiles purgées en les exposant à au moins un processus de destruction thermique, lesdites granules étant chauffées à ladite température pendant une durée suffisante afin de modifier la masse volumique apparente desdites granules ; lesdites granules comprenant au moins un polymère oléfinique multimodal ; et ledit procédé comprenant en outre le refroidissement des granules en dessous de la température de rétention.

2. Procédé selon la revendication 1, ledit niveau de matières organiques autres que ladite polyoléfine étant diminué, de préférence lesdites matières organiques étant choisies parmi les cires, les oligomères et les matières volatiles, éventuellement lesdites matières organiques étant diminuées à un niveau suffisant pour permettre à la résine d'être traitée en outre par au moins un processus de formation de film.

3. Procédé selon la revendication 1, lesdites matières organiques étant réglées à un niveau suffisant pour modifier le goût et/ou l'odeur de ladite résine, de préférence ledit procédé comprenant en outre au moins une étape de traitement pour former ladite résine en un article qui entrera en contact avec de la nourriture ou de l'eau, éventuellement ledit article comprenant un capuchon, une fermeture, une bouteille, un tuyau, un film ou un récipient.

4. Procédé selon la revendication 1, ladite modification de la masse volumique apparente des granules comprenant l'augmentation de ladite masse volumique apparente.

5. Procédé selon la revendication 1, lesdites granules étant préchauffées à une température allant de 60 à 166°C (140 à 330°F), éventuellement lesdites granules étant extrudées avant d'être introduites dans le dispositif de préchauffage et le récipient de rétention.

6. Procédé selon la revendication 1, ladite oléfine dudit polymère oléfinique étant choisie parmi l'éthylène, le propylène, le méthylpentène, l'hex-1-ène et le but-1-ène, éventuellement ledit polymère oléfinique étant bimodal.

7. Procédé selon la revendication 1, lesdites granules étant maintenues dans le récipient de rétention à une température allant de 60 à 166°C (140 à 330°F).

8. Procédé selon la revendication 1, ledit temps suffisant pour retirer au moins un monomère ou un oligomère des granules allant de 10 à 15 heures.

9. Procédé selon la revendication 1, ledit refroidissement étant effectué jusqu'à ce que les granules atteignent la température ambiante, éventuellement ledit refroidissement étant effectué à l'aide d'une purge de gaz froid ou un échangeur d'eau froide.

10. Procédé selon la revendication 1, lesdites granules refroidies possédant un diamètre nominal moyen allant de 1,27 à 8,89 mm (0,05 à 0,35 pouce).

11. Procédé selon la revendication 1, ladite purge des matières volatiles du récipient de rétention étant effectuée avec de l'air, un gaz combustible ou un gaz non hydrocarboné, éventuellement ledit gaz non hydrocarboné comprenant de l'azote.

12. Procédé selon la revendication 1, ledit au moins un processus de destruction thermique comprenant le passage des matières volatiles à travers une torche ou un dispositif d'oxydation thermique.

13. Procédé selon la revendication 1, ladite au moins une étape de traitement supplémentaire qui forme lesdites pastilles en un article comprenant l'extrusion, le moulage par injection, le moulage par soufflage, le thermoformage ou le rotomoulage.
